# EUROPÄISCHE PATENTSCHRIFT

(11) **EP 4 110 847 B1**
(45) Veröffentlichungstag und Bekanntmachung des Hinweises auf die Patenterteilung: **31.12.2025**
(21) Anmeldenummer: 21705990.6
(22) Anmeldetag: 22.02.2021
(51) Int. Cl.: C08G 59/50, C08L 63/00, C09D 163/00

(54) **HÄRTER FÜR EPOXIDHARZ-BESCHICHTUNGEN**
ACCELERATOR FOR EPOXY RESIN LAYERS
DURCISSEUR POUR REVÊTEMENTS DE RÉSINES ÉPOXYDES

(30) Priorität: 24.02.2020 EP 20158940
(43) Veröffentlichungstag der Anmeldung: 04.01.2023
(73) Patentinhaber: Sika Technology AG, 6340 Baar (CH)
(72) Erfinder: KASEMI, Edis, 8046 Zürich (CH); SARIOGLU, Oguz, 74080 Heilbronn (DE); BURCKHARDT, Urs, 8049 Zürich (CH); KRAMER, Andreas, 8008 Zürich (CH); STADELMANN, Ursula, 8046 Zürich (CH); GRÖTZINGER, Jochen, 73525 Schwäbisch Gmünd (DE); VON DER BRÜGGEN, Uwe, 74909 Meckesheim (DE)
(74) Vertreter: Sika Patent Attorneys
(86) Internationale Anmeldenummer: PCT/EP2021/054254
(87) Internationale Veröffentlichungsnummer: WO 2021/170513

(56) Entgegenhaltungen:
- EP-A1- 3 138 863
- WO-A1-2019/134821
- JP-A- 2007 277 401

## Beschreibung

### Technisches Gebiet

Die Erfindung betrifft Härter für Epoxidharz-Zusammensetzungen, welche besonders geeignet sind als Beschichtung, insbesondere für Böden.

### Stand der Technik

Beschichtungen auf Epoxidharz-Basis sind im Bauwesen weit verbreitet. Sie bestehen aus flüssigen Harz- und Härterkomponenten, welche vor der Applikation gemischt werden und bei Umgebungstemperaturen im Bereich von etwa 5 bis 35 °C aushärten. Die Beschichtungen sollen bei der Applikation möglichst niedrigviskos sein, so dass sie bei Umgebungstemperatur gut verlaufen. Nach der Applikation sollen sie möglichst schnell und störungsfrei aushärten, auch bei feuchtkalten Bedingungen, und dabei eine fehlerfreie Oberfläche ohne Trübungen, Flecken, Klebrigkeit oder Krater ausbilden. Nach der Aushärtung sollen sie eine hohe Härte bei geringer Sprödigkeit und hoher Glasübergangstemperatur besitzen, um mechanischer Beanspruchung möglichst gut zu widerstehen. Für optisch anspruchsvolle Anwendungen, beispielsweise Deckbeläge von Fussböden, sollen sie zudem einen hohen Glanzgrad und eine möglichst geringe Neigung zum Vergilben unter Lichteinfluss aufweisen.

Oft haben solche Epoxidharz-Beschichtungen aber eine Neigung zu Oberflächenstörungen wie Trübungen, Flecken, Rauheit oder Klebrigkeit, was auch als "Blushing" bezeichnet wird. Blushing wird durch die Salzbildung der in der Härterkomponente enthaltenen Amine mit Kohlendioxid aus der Luft verursacht und tritt besonders bei hoher Luftfeuchtigkeit und tiefen Temperaturen auf. Viele Härter für Epoxidharz-Beschichtungen enthalten Addukte von Diaminen mit Epoxidharz. Dies vermindert die Blushing-Effekte und ermöglicht zudem eine schnellere Aushärtung. Diamin-Epoxidharz-Addukte sind aber deutlich höherviskos als die freien Diamine, wodurch solche Härter oft erhebliche Mengen an Verdünner enthalten und/oder nur moderat mit anorganischen Füllstoffen gefüllt werden können. Verdünner werden bei der Aushärtung nicht in die Harzmatrix eingebaut und können durch Verdampfungs- oder Diffusionsprozesse in die Umgebung freigesetzt werden. Heutzutage werden aber zunehmend emissionsarme Produkte gewünscht, die nach der Aushärtung einen geringen Gehalt an freisetzbaren Substanzen aufweisen. Für emissionsarme oder emissionsfreie Epoxidharz-Zusammensetzungen können Verdünner deshalb nur in geringer Menge oder gar nicht eingesetzt werden.

EP 3,344,677 offenbart Epoxidharz-Zusammensetzungen, welche N-Benzyl-1,2-ethandiamin im Härter enthalten und Beschichtungen mit schönen Oberflächen ermöglichen. Die Beschichtungen enthalten entweder Diamin-Epoxidharz-Addukte, was ihre Viskosität stark erhöht, oder Polyoxypropylendiamine, wodurch sie eine unerwünscht niedrige Glasübergangstemperatur aufweisen.

JP 2007277401 A offenbart eine Epoxidharzzusammensetzung mit guter Härtungsfähigkeit bei Normaltemperatur, welche ein gehärtetes Produkt mit guter Witterungsbeständigkeit ergibt. Die Epoxidharzzusammensetzung umfasst ein Epoxidharz, ein Aminhärtungsmittel und einen Härtungsbeschleuniger. Beispiel 1 zeigt eine Mischung umfassend hydriertes Bisphenol-A-Epoxidharz, Isophorondiamin, N-Benzylethylendiamin, 2,4-Ditertiärbutylphenol und Benzylalkohol.

### Darstellung der Erfindung

Aufgabe der vorliegenden Erfindung ist es daher, einen Härter für Epoxidharze zur Verfügung zu stellen, der mit wenig oder ganz ohne Verdünner sehr niedrigviskose, gut verarbeitbare Epoxidharz-Zusammensetzungen mit schneller Aushärtung, hoher Endhärte und hoher Glasübergangstemperatur ermöglicht und geeignet ist für Beschichtungen, welche auch unter feuchtkalten Umgebungstemperaturen fehlerfreie, glänzende Oberflächen ergeben.

Diese Aufgabe wird mit einem Härter wie in Anspruch 1 beschrieben gelöst. Der Härter enthält 1-Amino-3-aminomethyl-3,5,5-trimethylcyclohexan (IPDA) und N-Benzyl-1,2-ethandiamin in einer solchen Menge, dass das Verhältnis der Anzahl ihrer Aminwasserstoffe im Bereich von 75/25 bis 30/70 liegt. Im erfindungsgemässen Verhältnis ermöglicht der Härter eine vorteilhafte Kombination aus hoher Glasübergangstemperatur, hoher Endhärte, schöner Oberfläche und schneller Aushärtung in der Kälte. Ein höherer Gehalt an IPDA bewirkt eine langsame Aushärtung, eine unerwünscht matte Oberfläche in der Kälte und eine erhöhte Neigung zum Vergilben, und ein höherer Gehalt an N-Benzyl-1,2-ethandiamin bewirkt eine unerwünscht niedrige Glasübergangstemperatur und Endhärte.

Überraschenderweise zeigen Beschichtungen mit dem erfindungsgemässen Härter eine besonders geringe Neigung zum Vergilben unter Lichteinfluss.

Der erfindungsgemässe Härter ermöglicht als Beschichtung geeignete Epoxidharz-Zusammensetzungen mit hervorragender Verarbeitbarkeit und schneller Aushärtung, welche auch bei feuchtkalten Bedingungen kaum zu Blushing-bedingten Fehlern neigen und nach der Aushärtung über eine hohe Härte, hohe Glasübergangstemperatur und überraschend geringe Neigung zum Vergilben verfügen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze, enthaltend 1-Amino-3-aminomethyl-3,5,5-trimethylcyclohexan (IPDA) in freier und/oder mit Epoxidharz adduktierter Form und N-Benzyl-1,2-ethandiamin in einer solchen Menge, dass das Verhältnis der Anzahl ihrer Aminwasserstoffe im Bereich von 75/25 bis 30/70 liegt.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Mol-Equivalent Aminwasserstoff enthält, bezeichnet. Es wird angegeben in der Masseinheit "g/Eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/Eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Gelierzeit" wird die Zeitspanne ab dem Mischen der Komponenten einer Epoxidharz-Zusammensetzung bis zu deren Gelieren bezeichnet.

Als "Raumtemperatur" wird eine Temperatur von 23 °C bezeichnet.

Das im Härter enthaltende IPDA wird bevorzugt eingesetzt in einer kommerziell verfügbaren Qualität, beispielsweise als Vestamin^{®} IPD (von Evonik) oder Baxxodur^{®} EC 201 (von BASF).

Das im Härter enthaltene IPDA liegt bevorzugt in freier, nicht mit Epoxidharz adduktierter Form vor. Bevorzugt enthält der Härter weniger als 10 Gewichts-%, besonders bevorzugt weniger als 5 Gewichts-%, insbesondere weniger als 1 Gewichts-%, mit Epoxidharz adduktiertes IPDA. Am meisten bevorzugt ist der Härter frei von mit Epoxidharz adduktiertem IPDA. Ein solcher Härter ist besonders niedrigviskos.

Das im Härter enthaltende N-Benzyl-1,2-ethandiamin weist bevorzugt eine Reinheit von mindestens 80 Gewichts-%, besonders bevorzugt mindestens 90 Gewichts-%, insbesondere mindestens 95 Gewichts-%, auf. Gegebenenfalls ist zusätzlich N,N'-Dibenzyl-1,2-ethandiamin enthalten. Bevorzugt ist weniger als 2 Gewichts-%, insbesondere weniger als 1 Gewichts-%, 1,2-Ethandiamin enthalten.

Das im Härter enthaltene N-Benzyl-1,2-ethandiamin liegt bevorzugt in freier, nicht mit Epoxidharz adduktierter Form vor. Bevorzugt enthält der Härter weniger als 10 Gewichts-%, besonders bevorzugt weniger als 5 Gewichts-%, insbesondere weniger als 1 Gewichts-%, mit Epoxidharz adduktiertes N-Benzyl-1,2-ethandiamin. Am meisten bevorzugt ist der Härter frei von mit Epoxidharz adduktiertem N-Benzyl-1,2-ethandiamin. Ein solcher Härter ist besonders niedrigviskos.

N-Benzyl-1,2-ethandiamin ist bevorzugt hergestellt mittels partieller Alkylierung von 1,2-Ethandiamin mit mindestens einem Benzylierungsmittel.

Bevorzugt ist die Alkylierung eine reduktive Alkylierung, wobei als Benzylierungsmittel Benzaldehyd und Wasserstoff eingesetzt wird.

Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.

Die reduktive Alkylierung wird bevorzugt bei einer Temperatur im Bereich von 40 bis 120 °C, insbesondere 60 bis 100 °C, durchgeführt.

Bevorzugt wird 1,2-Ethandiamin im stöchiometrischen Überschuss gegenüber Benzaldehyd eingesetzt und nach der Alkylierung nicht umgesetztes 1,2-Ethandiamin teilweise oder vollständig aus der Reaktionsmischung entfernt, insbesondere mittels Stripping.

Falls gewünscht kann die Reaktionsmischung anschliessend weiter gereinigt werden, insbesondere indem das erhaltene N-Benzyl-1,2-ethandiamin mittels Destillation zumindest teilweise von N,N'-Dibenzyl-1,2-ethandiamin befreit wird. Dies ermöglicht Härter mit besonders hoher Reaktivität und Epoxidharz-Zusammensetzungen mit besonders hoher Glasübergangstemperatur.

Das Verhältnis der Anzahl Aminwasserstoffe aus IPDA und N-Benzyl-1,2-ethandiamin liegt im Bereich von 75/25 bis 30/70. Ein solcher Härter ermöglicht Epoxidharz-Zusammensetzungen mit einer besonders guten Kombination aus schneller Aushärtung, hoher Härte, hoher Glasübergangstemperatur und schöner Oberfläche.

Besonders bevorzugt liegt das Verhältnis der Anzahl Aminwasserstoffe aus IPDA und N-Benzyl-1,2-ethandiamin im Bereich von 70/30 bis 50/50. Ein solcher Härter ermöglicht eine besonders hohe Glasübergangstemperatur bei schöner Oberfläche.

Der erfindungsgemässe Härter enthält bevorzugt mindestens einen weiteren Bestandteil ausgewählt aus der Gruppe bestehend aus weiteren Aminen, Beschleunigern und Verdünnern.

Als weiteres Amin geeignet sind insbesondere N-Benzyl-1,2-propandiamin, N-Benzyl-bis(aminomethyl)-1,3-benzol, N-(2-Ethylhexyl)-bis(aminomethyl)-1,3-benzol oder N-(2-Phenylethyl)-bis(aminomethyl)-1,3-benzol, 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis-(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethyl-cyclohexyl)methan, Bis(4-amino-3,5-dimethylcyclohexyl)methan, Bis(4-amino-3-ethyl-5-methylcyclohexyl)methan, 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatri-decan-1,13-diamin oder höhere Oligomere dieser Diamine, Bis(3-aminopropyl)-polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), N-Aminoethylpiperazin, 3-Dimethylaminopropylamin (DMAPA) oder 3-(3-(Dimethylamino)propylamino)propylamin (DMAPAPA), sowie weiterhin Addukte dieser Polyamine mit Epoxidharzen oder Monoepoxiden, oder Addukte von 1,2-Ethandiamin oder 1,2-Propandiamin mit Epoxidharzen oder Monoepoxiden und nachfolgender Entfernung von überschüssigem 1,2-Ethandiamin oder 1,2-Propandiamin mittels Destillation.

Es kann vorteilhaft sein, wenn der erfindungsgemässe Härter eine Kombination aus zwei oder mehr weiteren Aminen enthält.

Bevorzugt sind weitere Amine ausgewählt aus der Gruppe bestehend aus TMD, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, Bis(4-aminocyclohexyl)methan, 2(4)-Methyl-1,3-diaminocyclohexan, MXDA, Polyoxypropylendiaminen mit einem mittlerem Molekulargewicht Mₙ im Bereich von 200 bis 500 g/mol, Polyoxypropylentriaminen mit einem mittlerem Molekulargewicht Mₙ im Bereich von 300 bis 500 g/mol, DMAPAPA, BHMT, DETA, TETA, TEPA, PEHA, DPTA, N3-Amin, N4-Amin, Addukten von MXDA, DETA, TETA oder TEPA mit Epoxidharzen, und Addukten von MPMD, 1,2-Ethandiamin oder 1,2-Propandiamin mit Kresylglycidylether, bei welchen nicht umgesetztes MPMD 1,2-Ethandiamin oder 1,2-Propandiamin nach der Umsetzung destillativ entfernt wurde.

Davon bevorzugt sind 1,2-Diaminocyclohexan, 1,3-Bis(aminomethyl)cyclohexan, 1,4-Bis(aminomethyl)cyclohexan, 2(4)-Methyl-1,3-diaminocyclohexan, MXDA, Polyoxypropylendiaminen mit einem mittlerem Molekulargewicht Mₙ im Bereich von 200 bis 500 g/mol, und Polyoxypropylentriamine mit einem mittlerem Molekulargewicht Mₙ im Bereich von 300 bis 500 g/mol.

Besonders bevorzugt ist 1,3-Bis(aminomethyl)cyclohexan oder MXDA, insbesondere 1,3-Bis(aminomethyl)cyclohexan. Diese Amine ermöglichen eine besonders schnelle Aushärtung.

Weiterhin besonders bevorzugt sind Polyoxypropylendiamine oder -triamine. Diese ermöglichen eine besonders geringe Sprödigkeit.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Besonders bevorzugt enthält der Härter Salicylsäure, insbesondere in einer Menge im Bereich von 1 bis 15 Gewichtsteilen, bevorzugt 2 bis 12 Gewichtsteilen, insbesondere 3 bis 10 Gewichtsteilen, pro 100 Gewichtsteile der Summe aus IPDA und N-Benzyl-1,2-ethandiamin. Ein solcher Härter ermöglicht eine besonders schöne Oberfläche bei Aushärtung in der Kälte.

Am meisten bevorzugt enthält der Härter eine Kombination aus Salicylsäure und 2,4,6-Tris(dimethylaminomethyl)phenol. Dabei ist 2,4,6-Tris(dimethylaminomethyl)-phenol insbesondere in einer Menge im Bereich von 1 bis 15 Gewichtsteilen, bevorzugt 2 bis 12 Gewichtsteilen, insbesondere 3 bis 10 Gewichtsteilen, pro 100 Gewichtsteile der Summe aus IPDA und N-Benzyl-1,2-ethandiamin vorhanden. Ein solcher Härter ermöglicht eine besonders schnelle Aushärtung in Kombination mit einer besonders schönen Oberfläche, insbesondere bei Aushärtung in der Kälte
Geeignete Verdünner sind insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11-Penta-decadienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind Verdünner mit einem Siedepunkt von mehr als 200 °C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Phenolgruppen-haltige Verdünner zeigen auch eine Wirkung als Beschleuniger.

Der Härter kann weitere Bestandteile enthalten, insbesondere die Folgenden:
- Monoamine wie insbesondere Benzylamin oder Furfurylamin;
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA;
- Mannich-Basen, insbesondere Phenalkamine, also Umsetzungsprodukte von Phenolen, insbesondere Cardanol, mit Aldehyden, insbesondere Formaldehyd, und Polyaminen;
- aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol.

Bevorzugt enthält der Härter nur einen geringen Gehalt an weiteren Aminen.

Insbesondere stammen mindestens 30 %, bevorzugt mindestens 40 %, besonders bevorzugt minestens 50%, insbesondere mindestens 60 %, aller im Härter enthaltenen Aminwasserstoffe von N-Benzyl-1,2-ethandiamin und IPDA. Ein solcher Härter ermöglicht eine attraktive Kombination aus schneller Aushärtung, wenig Neigung zu Blushing-Effekten, hoher Härte und hoher Glasübergangstemperatur.

Bevorzugt enthält der Härter nur einen geringen Gehalt an Verdünnern, insbesondere 0 bis 50 Gewichts-%, bevorzugt 0 bis 30 Gewichts-%, Verdünner, insbesondere Benzylalkohol.

Der erfindungsgemässe Härter ist bevorzugt nicht wasserbasiert. Er enthält insbesondere weniger als 15 Gewichts-%, bevorzugt weniger als 10 Gewichts-%, Wasser. Ein solcher Härter ist geeignet für nicht-wässrige Epoxidharz-Produkte, insbesondere Bodenbeschichtungen.

Ein weiterer Gegenstand der vorliegenden Erfindung ist eine Epoxidharz-Zusammensetzung umfassend
- eine Harz-Komponente enthaltend mindestens ein Epoxidharz und
- eine Härter-Komponente umfassend den erfindungsgemässen Härter.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxy-naphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols, insbesondere ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Glycidylethern enthalten.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern und Füllstoffen.

Als Beschleuniger geeignet sind die bereits genannten, insbesondere Salicylsäure, Calciumnitrat oder 2,4,6-Tris(dimethylaminomethyl)phenol oder eine Kombination davon. Besonders bevorzugt ist Salicylsäure, insbesondere in Kombination mit 2,4,6-Tris(dimethylaminomethyl)phenol.

Als Verdünner geeignet sind die bereits genannten, insbesondere solche mit einem Siedepunkt von mehr als 200°C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt ist Calciumcarbonat, Quarzmehl, Quarzsand oder eine Kombination davon.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere dispergiertes Paraffinwachs, Filmbildehilfsmittel, Netzmittel, Verlaufmittel, Entschäumer, Entlüfter, Stabilisatoren gegen Oxidation, Wärme, Licht oder UV-Strahlung oder Biozide.

Bevorzugt enthält die Epoxidharz-Zusammensetzung weitere Hilfs- und Zusatzstoffe, insbesondere Pigmente, Netzmittel, Verlaufsmittel und/oder Entschäumer.

Bevorzugt enthält die Epoxidharz-Zusammensetzung nur einen geringen Gehalt an Verdünnern. Bevorzugt enthält sie weniger als 20 Gewichts-%, besonders bevorzugt weniger als 15 Gewichts-%, insbesondere weniger als 10 Gewichts-%, Verdünner. Dies ermöglicht emissionsarme oder emissionsfreie Epoxidharz-Produkte.

Bevorzugt enthält die Epoxidharz-Zusammensetzung nur einen geringen Gehalt an Wasser, bevorzugt weniger als 5 Gewichts-%, insbesondere weniger als 1 Gewichts-%, Wasser.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen primären und sekundären Aminogruppen und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Harz- und die Härter-Komponente der Epoxidharz-Zusammensetzung werden in voneinander getrennten Gebinden gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der Komponenten erfolgt mittels eines geeigneten Verfahrens; sie kann kontinuierlich oder batchweise erfolgen. Falls das Vermischen nicht unmittelbar vor der Applikation erfolgt, muss darauf geachtet werden, dass zwischen dem Vermischen der Komponenten und der Applikation nicht zu viel Zeit vergeht und die Applikation innerhalb der Topfzeit erfolgt. Die Vermischung erfolgt insbesondere bei Umgebungstemperatur, welche typischerweise im Bereich von etwa 5 bis 40°C, bevorzugt bei etwa 10 bis 35°C, liegt.

Mit dem Vermischen der beiden Komponenten beginnt die Aushärtung durch chemische Reaktion, wie vorgängig beschrieben. Die Aushärtung erfolgt typischerweise bei einer Temperatur im Bereich von 0 bis 150°C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Im frisch vermischten Zustand hat die Epoxidharz-Zusammensetzung eine niedrige Viskosität. Bevorzugt liegt die Viskosität 10 Minuten nach dem Vermischen der Harz- und der Härter-Komponente bei 20 °C im Bereich von 100 bis 4'000 mPa·s, bevorzugt 200 bis 3'000 mPa·s, besonders bevorzugt 200 bis bis 2'000 mPa·s, insbesondere 200 bis bis 1'500 mPa·s, gemessen mittels Kegel-Platten Viskosimeter bei einer Schergeschwindigkeit von 10 s⁻¹.

Bei Aushärtung in der Kälte bei 8 °C und 80 % relativer Luftfeuchtigkeit liegt die Shore D-Härte nach 24 Stunden bevorzugt bei mindestens 11. Dies wird insbesondere mit einem Härter mit einem Verhältnis der Anzahl Aminwasserstoffe aus IPDA und N-Benzyl-1,2-ethandiamin im Bereich von 70/30 bis 20/80 erreicht, welcher insbesondere zusätzlich Salicylsäure enthält.

Die Applikation der Epoxidharz-Zusammensetzung erfolgt auf mindestens ein Substrat, wobei die Folgenden besonders geeignet sind:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der Epoxidharz-Zusammensetzung wird eine ausgehärtete Zusammensetzung erhalten.

Die Epoxidharz-Zusammensetzung verfügt nach der Aushärtung über eine hohe Glasübergangstemperatur.

Bevorzugt liegt die Glasübergangstemperatur nach einer Aushärtezeit von 14 Tagen bei Raumtemperatur beim ersten Aufheizen (first run) bei mindestens 45 °C, bevorzugt bei mindestens 50 °C, und beim zweiten Aufheizen (second run) bei mindestens 60 °C, bevorzugt mindestens 65 °C, bestimmt mittels DSC mit einem Messprogramm (1) -10 °C während 2 min, (2) -10 bis 200 °C mit einer Aufheizrate von 10 K/min (= first run), (3) 200 bis -10 °C mit einer Kühlrate von -50 K/min, (4) -10 °C während 2 min, (5) -10 bis 180 °C mit einer Aufheizrate von 10 K/min (= second run).

Die Epoxidharz-Zusammensetzung wird bevorzugt verwendet als Beschichtung, Primer, Klebstoff, Dichtstoff, Vergussmasse, Giessharz, Imprägnierharz oder als Matrix für Faserverbundwerkstoffe (Composites) wie insbesondere CFK oder GFK.

Besonders bevorzugt wird die Epoxidharz-Zusammensetzung als Beschichtung verwendet. Als Beschichtung werden dabei flächig aufgebrachte Beläge aller Art verstanden, insbesondere Bodenbeläge, Anstriche, Lacke, Versiegelungen, Grundierungen, Primer oder Schutzbeschichtungen, insbesondere auch solche für schweren Korrosionsschutz.

Besonders geeignet ist die Epoxidharz-Zusammensetzung als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Besonders vorteilhaft wird die Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Für die Verwendung als Beschichtung weist die Epoxidharz-Zusammensetzung vorteilhaft eine flüssige Konsistenz mit niedriger Viskosität und guten Verlaufseigenschaften auf. Die vermischte Zusammensetzung wird innerhalb der Topfzeit typischerweise flächig als dünner Film mit einer Schichtdicke von etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl. Bei der Aushärtung entstehen typischerweise weitgehend homogene, glänzende und nichtklebrige Filme von hoher Härte, welche eine gute Haftung zu verschiedensten Substraten aufweisen.

Ein weiterer Gegenstand der Erfindung ist somit ein Verfahren zum Beschichten, umfassend die Schritte
(i) Vermischen der Komponenten der Epoxidharz-Zusammensetzung,
(ii) Applizieren der vermischten Zusammensetzung auf ein Substrat innerhalb der Topfzeit,
gefolgt von der Aushärtung der vermischten Zusammensetzung.

Auf die vollständig oder teilweise ausgehärtete Zusammensetzung kann eine weitere Beschichtung appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Weiterhin bevorzugt wird die Epoxidharz-Zusammensetzung als Klebstoff verwendet. Typischerweise weist die Epoxidharz-Zusammensetzung bei der Verwendung als Klebstoff nach dem Vermischen der Komponenten eine pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die beiden Substrate innerhalb der Offenzeit des Klebstoffs zu einer Verklebung gefügt.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie, insbesondere für die Armierung von Bauwerken mittels Stahllamellen oder Lamellen aus Kohlefaser-verstärkten Composite-Kunststoffen (CFK), für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten, für die Verankerung von Dübeln oder Stahlstäben in Bohrlöchern, für die Fixierung von beispielsweise Geländern, Brüstungen oder Türrahmen, für Reparaturen wie insbesondere die Verfüllung von Kanten, Löchern oder Fugen bei der Betoninstandsetzung, oder für das Aufkleben von Folien aus Polyvinylchlorid (PVC), flexibilisiertem Polyolefin (Combiflex^{®}) oder haftungsmodifiziertem chlorsulfoniertem Polyethylen (Hypalon^{®}) auf Beton oder Stahl.

Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Ebenfalls geeignet ist ein solcher Epoxidharz-Klebstoff für das Verfüllen von Hohlräumen wie Rissen, Spalten oder Bohrlöchern, wobei der Klebstoff in den Hohlraum gefüllt oder injiziert wird und nach der Aushärtung diesen ausfüllt und die Flanken des Hohlraums kraftschlüssig miteinander verbindet bzw. verklebt.

Ein weiterer Gegenstand der Erfindung ist somit ein Verfahren zum Verkleben, umfassend die Schritte
(i) Vermischen der Komponenten der Epoxidharz-Zusammensetzung,
(ii) Applizieren der vermischten Zusammensetzung innerhalb der Topfzeit,
   - entweder auf mindestens eines der zu verklebenden Substrate und Fügen der Substrate zu einer Verklebung innerhalb der Offenzeit,
   - oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Verklebt werden können gleichartige oder verschiedene Substrate.

Aus der Applikation und Aushärtung der Epoxidharz-Zusammensetzung wird ein Artikel erhalten.

Ein weiterer Gegenstand der Erfindung ist somit ein Artikel, erhalten aus der Verwendung der Epoxidharz-Zusammensetzung.

Der Artikel ist bevorzugt ein Bauwerk oder ein Teil davon, insbesondere ein Bauwerk des Hoch- oder Tiefbaus, ein Büro, eine Industriehalle, eine Turnhalle, ein Kühlraum, ein Silo, eine Brücke, ein Dach, ein Treppenhaus, ein Fussboden, ein Balkon, eine Terrasse oder ein Parkdeck, oder ein industrielles Gut oder ein Konsumgut, insbesondere ein Pier, eine Offshore-Plattform, ein Schleusentor, ein Kran, eine Spundwand, eine Rohrleitung oder ein Rotorblatt einer Windkraftanlage, oder ein Transportmittel wie insbesondere ein Automobil, ein Lastkraftwagen, ein Schienenfahrzeug, ein Schiff, ein Flugzeug oder ein Helikopter, oder ein Anbauteil davon.

Die Epoxidharz-Zusammensetzung zeichnet sich durch vorteilhafte Eigenschaften aus. Sie ist besonders niedrigviskos und somit hervorragend verarbeitbar, härtet zuverlässig und schnell aus, insbesondere auch bei feuchtkalten Bedingungen, wobei mechanisch hochwertige Beschichtungen mit hoher Härte, hoher Glasübergangstemperatur, schönen Oberflächen und überraschend wenig Neigung zum Vergilben entstehen. Solche Epoxidharz-Zusammensetzungen sind besonders geeignet als Beschichtungen, insbesondere für Böden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1_{N} HClO₄ in Essigsäure gegen Kristallviolett).

### Verwendete Substanzen und Abkürzungen:

| | |
|---|---|
| Araldite^{®} GY 250: | Bisphenol A-Diglycidylether, EEW 187 g/Eq (von Huntsman) |
| Araldite^{®} DY-E: | Monoglycidylether von C₁₂- bis C₁₄-Alkoholen, EEW ca. 290 g/Eq (von Huntsman) |
| IPDA: | 1-Amino-3-aminomethyl-3,5,5-trimethylcyclohexan, AHEW 42.6 g/Eq (Vestamin^{®} IPD, von Evonik) |
| B-EDA: | N-Benzyl-1,2-ethandiamin, hergestellt wie nachfolgend beschrieben, 150.2 g/mol, AHEW 50 g/Eq |
| BAC | 1,3-Bis(aminomethyl)cyclohexan, AHEW 35.5 g/Eq (von Mitsubishi Gas Chemical) |
| MXDA | 1,3-Bis(aminomethyl)benzol, AHEW 34 g/Eq (von Mitsubishi Gas Chemical) |
| TMD | 2,2(4),4-Trimethylhexamethylendiamin, AHEW 39.6 g/Eq (Vestamin^{®} TMD, von Evonik) |
| TEPA | Tetraethylenpentamin, AHEW ca. 30 g/Eq (technisch, von Huntsman) |
| Ancamine^{®} K54 | 2,4,6-Tris(dimethylaminomethyl)phenol (von Air Products) |

### N-Benzyl-1,2-ethandiamin (B-EDA):

In einem Rundkolben wurden 180.3 g (3 mol) 1,2-Ethandiamin unter Stickstoffatmosphäre bei Raumtemperatur vorgelegt. Unter gutem Rühren wurde langsam eine Lösung aus 106.0 g (1 mol) Benzaldehyd in 1200 ml Isopropanol dazugetropft und 2 Stunden nachgerührt. Die Reaktionsmischung wurde anschliessend bei einem Wasserstoff-Druck von 80 bar, einer Temperatur von 80°C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Ethandiamin, Wasser und Isopropanol entfernt wurden. Die so erhaltene Reaktionsmischung war eine klare, leicht gelbliche Flüssigkeit mit einer Aminzahl von 678 mg KOH/g und einem mittels GC bestimmten Gehalt an N-Benzyl-1,2-ethandiamin von ca. 85 Gewichts-% (Retentionszeit 8.47 - 8.57 min).

120 g dieser Reaktionsmischung wurden bei 80°C unter Vakuum mittels Destillation gereinigt, wobei 75.1 g Destillat (N-Benzyl-1,2-ethandiamin) bei einer Dampftemperatur von 60 bis 65°C und 0.06 mbar aufgefangen wurden. Erhalten wurde eine farblose Flüssigkeit mit einer Viskosität von 8 mPa·s bei 20°C, einer Aminzahl von 750 mg KOH/g und einer mittels GC bestimmten Reinheit von > 97%. Diese wurde für die weiteren Beispiele eingesetzt.

### Herstellung von Härtern und Epoxidharz-Zusammensetzungen:

### Beispiele 1 bis 18:

Für jedes Beispiel wurden die in den Tabellen 1 bis 3 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Ebenso wurden die in den Tabellen 1 bis 3 angegebenen Inhaltsstoffe der Härter-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C gemessen ("**Viskosität (10')**").

Die **Gelierzeit** wurde im Normklima bestimmt, indem die vermischte Zusammensetzung (25 g) mittels eines Spatels von Zeit zu Zeit bewegt wurde, bis sie zu gelieren begann.

Für die Bestimmung der **Shore D-Härte** nach DIN 53505 wurden je zwei zylindrische Prüfkörper (Durchmesser 20 mm, Dicke 5 mm) hergestellt. Einer wurde im Normklima gelagert und die Härte nach 1 Tag und nach 2 Tagen gemessen (1d NK) bzw. (2d NK), der andere wurde bei 8°C und 80% relativer Feuchtigkeit gelagert und die Härte nach 1 Tag und nach 2 Tagen im kalten Zustand gemessen (1d 8°/80%) bzw. (2d 8°/80%).

Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit **"Aspekt (NK)"** bezeichnet). Als "schön" wurde ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet. Als "matt" wurde ein Film mit reduziertem Glanz bezeichnet.

Ein zweiter Film wurde in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit **"Aspekt (8°/80%)"** bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel-entstanden waren. Als "Blushing" wurde die Anzahl weiss verfärbte Flecken angegeben. Als "(1)" wurde ein schwacher, weiss verfärbter Fleck bezeichnet. Als "1" wurde ein deutlicher, weiss verfärbter Fleck bezeichnet. Als "Ring" wurde angegeben, ob ein ringförmiger Abdruck durch Einsinken des ersten, 24h nach Applikation aufgesetzten Deckels vorhanden war. Ein solcher ringförmiger Abdruck zeigt an, dass die Beschichtung noch nicht begehbar ist. Als "(ja)" wurde ein sehr geringer ringförmiger Abdruck bezeichnet. Als "ja" wurde ein deutlicher ringförmiger Abdruck bezeichnet. An den so ausgehärteten Filmen wurde wiederum die Königshärte bestimmt, jeweils nach 7 Tagen bei 8°C und 80% relativer Feuchtigkeit ("Königsh. (7d 8°/80%)"), dann nach weiteren 2 Tagen im NK ("Königsh. (+2d NK)") bzw. 7 Tagen im NK ("Königsh. (+7d NK)") bzw. 14d im NK ("Königsh. (+14d NK)"). Der **Tg**-Wert (Glasübergangstemperatur) wurde mittels DSC an ausgehärteten Proben bestimmt, welche während 14 Tagen im Normklima gelagert waren, mit einem Mettler Toledo DSC 3+ 700 Gerät und dem Messprogramm (1) -10 °C während 2 min, (2) -10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet (**Q-Sun (72h)**). Anschliessend wurde der Farbunterschied ΔE des so belasteten Films im Vergleich zum entsprechenden nicht belasteten Film mittels eines Colorimeters NH310 von Shenzen 3NH Technology Co. LTD, ausgerüstet mit Silicon Photoelectric Diode Detector, Light Source A, Color Space Measurement Interface CIE L*a*b*C*H*, bestimmt.

Die Resultate sind in den Tabellen 1 bis 3 angegeben.

Die mit "(Ref.)" bezeichneten Beispiele sind Vergleichsbeispiele.

**Tabelle 1: Zusammensetzung und Eigenschaften der Beispiele 1 bis 7.**

| **Beispiel** | | **1 (Ref.)** | **2 (Ref.)** | **3** | **4** | **5** | **6 (Ref.)** | **7 (Ref.)** |
|---|---|---|---|---|---|---|---|---|
| **Harz-Komp.:** | | | | | | | | |
| Araldite^{®} GY 250: | | 167.2 | 167.2 | 167.2 | 167.2 | 167.2 | 167.2 | 167.2 |
| Araldite^{®} DY-E: | | 31.8 | 31.8 | 31.8 | 31.8 | 31.8 | 31.8 | 31.8 |

| **Härter-Komp.:** | | | | | | | | |
|---|---|---|---|---|---|---|---|---|
| IPDA | | 42.6 | 34.1 | 25.6 | 21.3 | 12.8 | 6.4 | - |
| B-EDA | | - | 10.0 | 20.0 | 25.0 | 35.0 | 42.5 | 50.0 |
| Benzylalkohol | | 25.0 | 25.0 | 25.0 | 25.0 | 25.0 | 25.0 | 25.0 |
| Salicylsäure | | 2.0 | 2.0 | 2.0 | 2.0 | 2.0 | 2.0 | 2.0 |
| Ancamine^{®} K54 | | 2.0 | 2.0 | 2.0 | 2.0 | 2.0 | 2.0 | 2.0 |
| *IPDA* / *B-EDA¹* | | *100* / *0* | *80* / *20* | *60* / *40* | *50* / *50* | *30* / *70* | 15 / 85 | *0*/*100* |
| Viskosität (10') [Pa·s] | | 0.79 | 0.56 | 0.49 | 0.45 | 0.44 | 0.40 | 0.30 |
| Gelierzeit (h:min) | | 4:00 | 4:05 | 4:00 | 4:00 | 4:10 | 3:51 | 3:53 |
| Shore D | (1d NK) | 69 | 59 | 58 | 61 | 56 | 58 | 51 |
| | (2d NK) | 75 | 72 | 72 | 71 | 66 | 68 | 56 |
| Shore D | (1d 8°/80%) | 9 | 8 | 11 | 13 | 14 | 15 | 18 |
| | (2d 8°/80%) | 63 | 45 | 59 | 65 | 66 | 62 | 66 |
| Königshärte [s] | (1d NK) | 74 | 46 | 34 | 27 | 29 | 21 | 14 |
| | (2d NK) | 140 | 115 | 91 | 73 | 48 | 36 | 24 |
| | (4d NK) | 167 | 148 | 137 | 120 | 81 | 64 | 28 |
| | (7d NK) | 175 | 161 | 151 | 139 | 101 | 77 | 31 |
| | (14d NK) | 177 | 165 | 160 | 157 | 116 | 83 | 31 |
| Aspekt (NK) | | schön | schön | schön | schön | schön | schön | schön |
| Tg 1st / 2nd run [°C] | | 57 / 87 | 54 / 79 | 50 / 73 | 47 / 66 | 46 / 60 | 42 / 53 | 40 / 50 |
| Q-Sun (72h) ΔE | | 16.8 | 12.7 | 9.7 | 10.7 | 11.4 | 13.0 | 12.9 |
| Königsh. [s] | (7d 8°/80%) | 70 | 46 | 25 | 25 | 11 | 10 | 8 |
| | (+2d NK) | 150 | 134 | 123 | 88 | 57 | 32 | 22 |
| | (+7d NK) | 171 | 157 | 155 | 109 | 69 | 67 | 41 |
| | (+14d NK) | 172 | 175 | 161 | 139 | 88 | 68 | 41 |
| Aspekt (8°/80%) | | matt | schön | schön | schön | schön | schön | schön |
| Blushing | | (1) | (1) | (1) | (1) | (1) | (1) | (1) |
| Ring | | ja | (ja) | kein | kein | kein | kein | kein |

| | | | | | | | | |
|---|---|---|---|---|---|---|---|---|
| ¹ Verhältnis der Aminwasserstoff-Equivalente aus IPDA und B-EDA | | | | | | | | |

**Tabelle 2: Zusammensetzung und Eigenschaften der Beispiele 8 bis 11.**

| **Beispiel** | | **8 (Ref.)** | **9 (Ref.)** | **10 (Ref.)** | **11 (Ref.)** |
|---|---|---|---|---|---|
| **Harz-Komp.:** | | | | | |
| Araldite^{®} GY 250: | | 167.2 | 167.2 | 167.2 | 167.2 |
| Araldite^{®} DY-E: | | 31.8 | 31.8 | 31.8 | 31.8 |

| **Härter-Komp.:** | | | | | |
|---|---|---|---|---|---|
| weiteres Amin | | **BAC** | **MXDA** | **TMD** | **TEPA** |
| | | 17.8 | 17.0 | 19.9 | 15.0 |
| B-EDA | | 25.0 | 25.0 | 25.0 | 25.0 |
| Benzylalkohol | | 25.0 | 25.0 | 25.0 | 25.0 |
| Salicylsäure | | 2.0 | 2.0 | 2.0 | 2.0 |
| Ancamine^{®} K54 | | 2.0 | 2.0 | 2.0 | 2.0 |
| Viskosität (10') [Pa·s] | | 0.42 | 0.36 | 0.35 | 0.48 |
| Gelierzeit (h:min) | | 3:00 | 3:30 | 3:30 | 3:35 |
| Shore D | (1d NK) | 70 | 70 | 63 | 68 |
| | (2d NK) | 72 | 74 | 71 | 75 |
| Shore D | (1d 8°/80%) | 48 | 44 | 28 | 27 |
| | (2d 8°/80%) | 74 | 77 | 72 | 76 |
| Königshärte [s] | (1d NK) | 38 | 16 | 12 | 13 |
| | (2d NK) | 73 | 36 | 35 | 28 |
| | (7d NK) | 99 | 62 | 76 | 63 |
| | (14d NK) | 123 | 94 | 85 | 84 |
| Aspekt (NK) | | schön | leicht Struktur | schön | leicht Struktur |
| Tg 1st / 2nd run [°C] | | 41 / 60 | 41 / 51 | 40 / 57 | 44 / 51 |
| Q-Sun (72h) ΔE | | 14.2 | 13.4 | 13.6 | 16.9 |
| Königsh. [s] | (7d 8°/80%) | 14 | 10 | 8 | 4 |
| | (+2d NK) | 56 | 24 | 38 | 7 |
| | (+7d NK) | 83 | 45 | 52 | 18 |
| | (+14d NK) | n.b. | n.b. | n.b. | n.b. |
| Aspekt (8°/80%) | | leicht trüb | trüb, Struktur | schön | trüb, klebrig |
| Blushing | | 0 | 4 | 0 | 4 |
| Ring | | kein | kein | (ja) | ja |

**Tabelle 3: Zusammensetzung und Eigenschaften der Beispiele 12 bis 18.**

| **Beispiel** | | **12** | **13** | **14** | **15** | **16** | **17** | **18** |
|---|---|---|---|---|---|---|---|---|
| **Harz-Komponente:** | | | | | | | | |
| Araldite^{®} GY 250: | | 167.2 | 167.2 | 167.2 | 167.2 | 167.2 | 167.2 | 167.2 |
| Araldite^{®} DY-E: | | 31.8 | 31.8 | 31.8 | 31.8 | 31.8 | 31.8 | 31.8 |

| **Härter-Komponente:** | | | | | | | | |
|---|---|---|---|---|---|---|---|---|
| IPDA | | 21.3 | 21.3 | 21.3 | 21.3 | 21.3 | 21.3 | 25.6 |
| B-EDA | | 25.0 | 25.0 | 25.0 | 25.0 | 25.0 | 25.0 | 20.0 |
| Benzylalkohol | | 25.0 | 25.0 | 25.0 | 25.0 | 25.0 | 25.0 | 25.0 |
| Salicylsäure | | 2.0 | - | 2.0 | - | 4.0 | 4.0 | 2.0 |
| Ancamine^{®} K54 | | 2.0 | 2.0 | - | 4.0 | - | 4.0 | 4.0 |
| *IPDA* / *B-EDA¹* | | *50*/*50* | *50*/*50* | *50*/*50* | *50*/*50* | *50*/*50* | *50*/*50* | *60*/*40* |
| Viskosität (10') [Pa·s] | | 0.39 | 0.26 | 0.34 | 0.23 | 0.49 | 0.59 | 0.49 |
| Gelierzeit (h:min) | | 4:00 | 4:30 | 3:30 | 3:50 | 3:00 | 2:25 | 3:20 |
| Shore D | (1d NK) | 68 | 69 | 58 | 74 | 62 | 72 | 68 |
| | (2d NK) | 75 | 78 | 73 | 79 | 73 | 77 | 71 |
| Shore D | (1d 8°/80%) | 17 | 10 | 14 | 24 | 30 | 41 | 37 |
| | (2d 8°/80%) | 61 | 61 | 20 | 39 | 65 | 63 | 70 |
| Königshärte [s] | (1d NK) | 36 | 32 | 25 | 53 | 22 | 52 | 63 |
| | (2d NK) | 77 | 84 | 63 | 108 | 59 | 94 | 116 |
| | (7d NK) | 137 | 129 | 111 | 153 | 119 | 146 | 162 |
| | (14d NK) | 155 | 151 | 146 | 167 | 143 | 160 | 169 |
| Aspekt (NK) | | schön | schön | schön | schön | schön | schön | schön |
| Königsh. [s] | (7d 8°/80%) | 25 | 25 | 13 | 34 | 17 | 29 | 41 |
| | (+2d NK) | 66 | 84 | 39 | 78 | 77 | 105 | 114 |
| | (+7d NK) | 132 | 132 | 87 | 146 | 105 | 141 | 167 |
| | (+14d NK) | 133 | 144 | 127 | 150 | 140 | 147 | 168 |
| Aspekt (8°/80%) | | schön | schön | schön | leicht trüb | schön | schön | schön |
| Blushing | | (1) | 1 | (1) | 1 | (1) | (1) | (1) |
| Ring | | kein | kein | ja | kein | ja | kein | kein |

| | | | | | | | | |
|---|---|---|---|---|---|---|---|---|
| ¹ Verhältnis der Aminwasserstoff-Equivalente aus IPDA und B-EDA | | | | | | | | |

### Beispiele 19 bis 21:

Für diese Beispiele wurde eine gefüllte, kommerzielle Harz-Komponente in der in Tabelle 4 angegebenen Menge eingesetzt: Sikafloor^{®}-264N Komponente A RAL 5005 (von Sika).

Die in Tabelle 4 angegebenen Inhaltsstoffe der Härter-Komponente wurden wie vorgänig beschrieben verarbeitet und aufbewahrt. Anschliessend wurden die beiden Komponenten wie vorgängig beschrieben zu einer homogenen Flüssigkeit verarbeitet und wie für das Beispiel 1 angegeben geprüft.

Die Resultate sind in Tabelle 4 angegeben.

**Tabelle 4: Zusammensetzung und Eigenschaften der Beispiele 19 bis 21.**

| **Beispiel** | | **19** | **20** | **21** |
|---|---|---|---|---|
| **Harz-Komponente:** | | | | |
| Sikafloor^{®}-264N Komponente A | | 436.0 | 436.0 | 436.0 |

| **Härter-Komponente:** | | | | |
|---|---|---|---|---|
| IPDA | | 25.6 | 29.8 | 29.8 |
| B-EDA | | 20.0 | 15.0 | 10.0 |
| BAC | | - | - | 7.1 |
| Benzylalkohol | | 25.0 | 35.0 | 35.0 |
| Salicylsäure | | 2.0 | 2.0 | 2.0 |
| Ancamine^{®} K54 | | 4.0 | 4.0 | 4.0 |
| *IPDA* / *B-EDA¹* | | *60*/*40* | *70*/*30* | 75/25 |
| Viskosität (10') [Pa·s] | | 2.7 | 2.4 | 3.0 |
| Gelierzeit (h:min) | | 2:50 | 3:15 | 2:45 |
| Shore D | (1d NK) | 68 | 59 | 66 |
| | (2d NK) | 73 | 69 | 73 |
| Shore D | (1d 8°/80%) | 48 | 24 | 40 |
| | (2d 8°/80%) | 74 | 62 | 65 |
| Königshärte [s] | (1d NK) | 52 | 25 | 34 |
| | (2d NK) | 97 | 57 | 69 |
| | (7d NK) | 148 | 120 | 119 |
| | (14d NK) | 148 | 133 | 125 |
| Aspekt (NK) | | schön | schön | schön |
| Q-Sun (72h) ΔE | | 6.0 | 7.3 | 5.6 |
| Königsh. [s] | (7d 8°/80%) | 11 | 17 | 24 |
| | (+2d NK) | 83 | 62 | 64 |
| | (+7d NK) | 98 | 81 | 83 |
| | (+14d NK) | 111 | 88 | 92 |
| Aspekt (8°/80%) | | schön | schön | schön |
| Blushing | | (1) | (1) | 3 |
| Ring | | kein | kein | kein |

| | | | | |
|---|---|---|---|---|
| ¹ Verhältnis der Aminwasserstoff-Equivalente aus IPDA und B-EDA | | | | |

## Patentansprüche

1. Härter für Epoxidharze, enthaltend 1-Amino-3-aminomethyl-3,5,5-trimethylcyclohexan und N-Benzyl-1,2-ethandiamin in einer solchen Menge, dass das Verhältnis der Anzahl ihrer Aminwasserstoffe im Bereich von 75/25 bis 30/70 liegt.

2. Härter gemäss Anspruch 1, **dadurch gekennzeichnet, dass** weniger als 10 Gewichts-%, besonders bevorzugt weniger als 5 Gewichts-%, insbesondere weniger als 1 Gewichts-%, mit Epoxidharz adduktiertes 1-Amino-3-aminomethyl-3,5,5-trimethylcyclohexan enthalten ist.

3. Härter gemäss einem der Ansprüche 1 bis 2, **dadurch gekennzeichnet, dass** N-Benzyl-1,2-ethandiamin eine Reinheit von mindestens 80 Gewichts-% aufweist.

4. Härter gemäss einem der Ansprüche 1 bis 3, **dadurch gekennzeichnet, dass** weniger als 10 Gewichts-%, besonders bevorzugt weniger als 5 Gewichts-%, insbesondere weniger als 1 Gewichts-%, mit Epoxidharz adduktiertes N-Benzyl-1,2-ethandiamin enthalten ist.

5. Härter gemäss einem der Ansprüche 1 bis 4, **dadurch gekennzeichnet, dass** mindestens ein weiterer Bestandteil ausgewählt aus der Gruppe bestehend aus weiteren Aminen, Beschleunigern und Verdünnern enthalten ist.

6. Härter gemäss einem der Ansprüche 1 bis 5, **dadurch gekennzeichnet, dass** mindestens 30 %, mehr bevorzugt mindestens 40 %, besonders bevorzugt minestens 50%, insbesondere mindestens 60 %, aller im Härter enthaltenen Aminwasserstoffe von 1-Amino-3-aminomethyl-3,5,5-trimethylcyclohexan und N-Benzyl-1,2-ethandiamin stammen.

7. Härter gemäss einem der Ansprüche 1 bis 6, **dadurch gekennzeichnet, dass** Salicylsäure enthalten ist.

8. Epoxidharz-Zusammensetzung umfassend
- eine Harz-Komponente enthaltend mindestens ein Epoxidharz und
- eine Härter-Komponente enthaltend den Härter gemäss einem der Ansprüche 1 bis 7.

9. Epoxidharz-Zusammensetzung gemäss Anspruch 8, **dadurch gekennzeichnet, dass** sie 10 Minuten nach dem Vermischen der Harz- und der Härter-Komponente eine Viskosität bei 20 °C im Bereich von 100 bis 4'000 mPa·s, bevorzugt 200 bis 3'000 mPa·s, besonders bevorzugt 200 bis bis 2'000 mPa·s, insbesondere 200 bis bis 1'500 mPa·s, aufweist, gemessen mittels Kegel-Platten Viskosimeter bei einer Schergeschwindigkeit von 10 s⁻¹.

10. Epoxidharz-Zusammensetzung gemäss einem der Ansprüche 8 bis 9, **dadurch gekennzeichnet, dass** sie nach dem Vermischen der Komponenten und einer Aushärtezeit von 14 Tagen bei Raumtemperatur eine Glasübergangstemperatur beim ersten Aufheizen (first run) von mindestens 45 °C, bevorzugt bei mindestens 50 °C, und beim zweiten Aufheizen (second run) bei mindestens 60 °C, bevorzugt mindestens 65 °C, aufweist, bestimmt mittels DSC mit einem Messprogramm (1) -10 °C während 2 min, (2) -10 bis 200 °C mit einer Aufheizrate von 10 K/min (= first run), (3) 200 bis -10 °C mit einer Kühlrate von -50 K/min, (4) -10 °C während 2 min, (5) -10 bis 180 °C mit einer Aufheizrate von 10 K/min (= second run).

11. Verwendung der Epoxidharz-Zusammensetzung gemäss einem der Ansprüch 8 bis 10 als Beschichtung, Primer, Klebstoff, Dichtstoff, Vergussmasse, Giessharz, Imprägnierharz oder als Matrix für Faserverbundwerkstoffe.

12. Verfahren zum Beschichten, umfassend die Schritte
(i) Vermischen der Komponenten der Epoxidharz-Zusammensetzung gemäss einem der Ansprüch 8 bis 10,
(ii) Applizieren der vermischten Zusammensetzung auf ein Substrat innerhalb der Topfzeit,
gefolgt von der Aushärtung der vermischten Zusammensetzung.

13. Verfahren zum Verkleben, umfassend die Schritte
(i) Vermischen der Komponenten der Epoxidharz-Zusammensetzung gemäss einem der Ansprüch 8 bis 10,
(ii) Applizieren der vermischten Zusammensetzung innerhalb der Topfzeit,
- entweder auf mindestens eines der zu verklebenden Substrate und Fügen der Substrate zu einer Verklebung innerhalb der Offenzeit,
- oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

14. Artikel erhalten aus der Verwendung gemäss Anspruch 11 oder einem Verfahren gemäss einem der Ansprüche 12 oder 13.

## Claims

1. Curing agent for epoxy resins, comprising 1-amino-3-aminomethyl-3,5,5-trimethylcyclohexane and N-benzylethane-1,2-diamine in such an amount that the ratio of the number of amine hydrogens therein is within a range from 75/25 to 30/70.

2. Curing agent according to Claim 1, **characterized in that** less than 10% by weight, more preferably less than 5% by weight, in particular less than 1% by weight, of 1-amino-3-aminomethyl-3,5,5-trimethylcyclohexane adducted with epoxy resin is present.

3. Curing agent according to either of Claims 1 and 2, **characterized in that** N-benzylethane-1,2-diamine has a purity of at least 80% by weight.

4. Curing agent according to any of Claims 1 to 3, **characterized in that** less than 10% by weight, more preferably less than 5% by weight, in particular less than 1% by weight, of N-benzylethane-1,2-diamine adducted with epoxy resin is present.

5. Curing agent according to any of Claims 1 to 4, **characterized in that** at least one further constituent selected from the group consisting of further amines, accelerators, and thinners is present.

6. Curing agent according to any of Claims 1 to 5, **characterized in that** at least 30%, preferably at least 40%, more preferably at least 50%, in particular at least 60%, of all the amine hydrogens present in the curing agent originate from 1-amino-3-aminomethyl-3,5,5-trimethylcyclohexane and N-benzylethane-1,2-diamine.

7. Curing agent according to any of Claims 1 to 6, **characterized in that** it contains salicylic acid.

8. Epoxy resin composition comprising
- a resin component comprising at least one epoxy resin and
- a curing agent component comprising the curing agent according to any of Claims 1 to 7.

9. Epoxy resin composition according to Claim 8, **characterized in that**, 10 minutes after the resin component and curing agent component have been mixed, it has a viscosity at 20°C within a range from 100 to 4000 mPa·s, preferably 200 to 3000 mPa·s, more preferably 200 to 2000 mPa·s, in particular 200 to 1500 mPa·s, measured using a cone-plate viscometer at a shear rate of 10 s⁻¹.

10. Epoxy resin composition according to either of Claims 8 and 9, **characterized in that**, after the components have been mixed and after a curing time of 14 days at room temperature, it has a glass transition temperature during the first heating (first run) of at least 45°C, preferably at least 50°C, and in the second heating (second run) at least 60°C, preferably at least 65°C, determined by DSC with a measurement program of (1) -10°C for 2 min, (2) -10 to 200°C at a heating rate of 10 K/min (= first run), (3) 200 to -10°C at a cooling rate of -50 K/min, (4) -10°C for 2 min, (5) -10 to 180°C at a heating rate of 10 K/min (= second run).

11. Use of the epoxy resin composition according to any of Claims 8 to 10 as coating, primer, adhesive, sealant, potting compound, casting resin, impregnating resin or as matrix for fibre composites.

12. Method for coating, comprising the steps of
(i) mixing the components of the epoxy resin composition according to any of Claims 8 to 10,
(ii) applying the mixed composition to a substrate within the pot life,
followed by curing of the mixed composition.

13. Method for bonding, comprising the steps of
(i) mixing the components of the epoxy resin composition according to any of Claims 8 to 10,
(ii) applying the mixed composition within the pot life,
- either to at least one of the substrates to be bonded and joining the substrates to form a bond within the open time,
- or into a cavity or gap between two or more substrates and optionally inserting an anchor into the cavity or gap within the open time,
followed by curing of the mixed composition.

14. Article obtained from the use according to Claim 11 or a method according to either of Claims 12 and 13.

## Revendications

1. Durcisseur pour résines époxyde, contenant du 1-amino-3-aminométhyl-3,5,5-triméthylcyclohexane et de la N-benzyl-1,2-éthanediamine en une quantité telle que le rapport du nombre de leurs hydrogènes de fonction amine se situe dans la plage de 75/25 à 30/70.

2. Durcisseur selon la revendication 1, **caractérisé en ce qu'**il contient moins de 10% en poids, de manière particulièrement préférée moins de 5% en poids, en particulier moins de 1% en poids de 1-amino-3-aminométhyl-3,5,5-triméthylcyclohexane additionné de résine époxyde.

3. Durcisseur selon l'une des revendications 1 à 2, **caractérisé en ce que** la N-benzyl-1,2-éthanediamine présente une pureté d'au moins 80% en poids.

4. Durcisseur selon l'une des revendications 1 à 3, **caractérisé en ce qu'**il contient moins de 10% en poids, de manière particulièrement préférée moins de 5% en poids, en particulier moins de 1% en poids de N-benzyl-1,2-éthanediamine additionné de résine époxyde.

5. Durcisseur selon l'une des revendications 1 à 4, **caractérisé en ce qu'**il contient au moins un autre constituant choisi dans le groupe constitué par d'autres amines, les accélérateurs et les diluants.

6. Durcisseur selon l'une des revendications 1 à 5, **caractérisé en ce qu'**au moins 30%, plus préférablement au moins 40%, de manière particulièrement préférée au moins 50%, en particulier au moins 60% de tous les hydrogènes de fonction amine contenus dans le durcisseur sont issus du 1-amino-3-aminométhyl-3,5,5-triméthylcyclohexane et de la N-benzyl-1,2-éthanediamine.

7. Durcisseur selon l'une des revendications 1 à 6, **caractérisé en ce qu'**il contient de l'acide salicylique.

8. Composition de résine époxyde, comprenant
- un composant résine contenant au moins une résine époxyde et
- un composant durcisseur, comprenant le durcisseur selon l'une des revendications 1 à 7.

9. Composition de résine époxyde selon la revendication 8, caractérisée en qu'elle présente, 10 minutes après le mélange du composant résine et du composant durcisseur, une viscosité, à 20°C, dans la plage de 100 à 4000 mPa.s, de préférence de 200 à 3000 mPa.s, de manière particulièrement préférée de 200 à 2000 mPa.s, en particulier de 200 à 1500 mPa.s, mesurée au moyen d'un viscosimètre à cône-plaque à une vitesse de cisaillement de 10 s⁻¹.

10. Composition de résine époxyde selon l'une des revendications 8 à 9, **caractérisée en ce qu'**elle présente, après le mélange des composants et un temps de durcissement de 14 jours à température ambiante, une température de transition vitreuse lors du premier chauffage (first run) d'au moins 45°C, de préférence d'au moins 50°C, et lors du deuxième chauffage (second run) d'au moins 60°C, de préférence d'au moins 65°C, déterminée par DSC (calorimétrie à balayage différentiel) à l'aide d'un programme de mesure (1) -10°C pendant 2 min, (2) -10 à 200°C à une vitesse de chauffage de 10 K/min (= first run), (3) 200 à -10°C à une vitesse de refroidissement de -50 K/min, (4) -10°C pendant 2 min, (5) -10 à 180°C à une vitesse de chauffage de 10 K/min (= second run).

11. Utilisation de la résine époxyde selon l'une des revendications 8 à 10 comme revêtement, apprêt, adhésif, matériau d'étanchéité, masse de scellement, résine de coulée, résine d'imprégnation ou comme matrice pour des matériaux composites fibreux.

12. Procédé de revêtement, comprenant les étapes
(i) mélange des composants de la composition de résine époxyde selon l'une des revendications 8 à 10,
(ii) application de la composition mélangée sur un substrat dans le temps de vie en pot,
suivie du durcissement de la composition mélangée.

13. Procédé de collage, comprenant les étapes
(i) mélange des composants de la composition de résine époxyde selon l'une des revendications 8 à 10,
(ii) application de la composition mélangée dans le temps de vie en pot,
- soit sur au moins l'un des supports à coller et assemblage des supports pour l'obtention d'un collage dans le temps ouvert,
- soit dans un espace creux ou dans une fente entre plusieurs substrats et le cas échéant insertion d'une ancre dans l'espace creux ou la fente dans le temps ouvert,
suivie du durcissement de la composition mélangée.

14. Article, obtenu à partir de l'utilisation selon la revendication 11 ou d'un procédé selon l'une des revendications 12 ou 13.
